# EUROPÄISCHE PATENTSCHRIFT

(11) **EP 1 619 044 B1**
(45) Veröffentlichungstag und Bekanntmachung des Hinweises auf die Patenterteilung: **25.05.2011**
(21) Anmeldenummer: 05014819.6
(22) Anmeldetag: 08.07.2005
(51) Int. Cl.: B60B 7/00, B60B 27/00

(54) **Abdeckkappe für die Radnabe einer Fahrzeugachse**
Hub cap for a vehicle axle
Chapeau de moyeu pour moyeu de véhicule

(30) Priorität: 22.07.2004 DE 102004035690
(43) Veröffentlichungstag der Anmeldung: 25.01.2006
(73) Patentinhaber: BPW Bergische Achsen KG, 51674 Wiehl (DE)
(72) Erfinder: Pack, Hartmut, Dipl.-Ing., 51580 Reichshof (DE); Leidig, Hans-Josef, 51580 Reichshof (DE)
(74) Vertreter: Christophersen & Partner

(56) Entgegenhaltungen:
- DE-U1- 29 705 240
- US-A- 4 680 454
- US-A- 4 697 278
- US-A- 4 989 222

## Beschreibung

Die Erfindung betrifft eine Abdeckkappe für die Radnabe einer Fahrzeugachse, deren zentrale Achsmutter durch ein Sicherungselement gegen Losdrehen gesichert ist, mit einer Einrichtung zur Erfassung der Nabenumdrehungen sowie Mitteln zur Umwandlung der umfassten Nabenumdrehungen in einen Wert, der auf einer außen an der Abdeckkappe sichtbaren Anzeige darstellbar ist.

Eine solche Abdeckkappe für die Radnabe einer Fahrzeugachse ist in ihrer Grundstruktur aus der DE 297 05 240 U1 bekannt. Die Kappe deckt das offene Ende der Radnabe sowie das Ende des Achsschenkels der Achse mit der darauf befestigten Achsmutter nach außen hin ab. Hierzu ist die Abdeckkappe auf einem Bund der Radnabe befestigt, so dass die Abdeckkappe im Betrieb zusammen mit der wälzgelagerten Radnabe umläuft.

Bekannt sind derartige Abdeckkappen auch bereits mit zusätzlichen Einrichtungen zur Erfassung der Nabenumdrehungen, sogenannten Hubodometem. Viele Geräte arbeiten mechanisch mit einem zentral in der Abdeckkappe gelagerten Gewicht welches, anders als die Abdeckkappe, seine Winkellage immer beibehält. Aus der Relativbewegung wird mittels eines eingebauten Getriebes die Anzahl der Umdrehungen abgeleitet, und über einen ebenfalls durch ein Getriebe realisierten Umrechnungsfaktor wird an der Außenseite der Kappe die Kilometerleistung angezeigt. Zur Anzeige dient ein mechanisches Zahlenstellwerk, welches daher die aus der Umdrehungszahl des Rades sowie dessen Radumfang ermittelte Kilometerleistung anzeigt. Solche mechanischen Hubodometer arbeiten zuverlässig, sie sind jedoch aufgrund der aufwendigen Mechanik teuer in der Herstellung. Von Nachteil ist auch, dass die Anzeige der gefahrenen Kilometer nur für einen ganz bestimmten Reifenumfang stimmt. Für einen anderen Reifenumfang des Fahrzeugrades muss das Zählwerk durch Austausch mechanischer Komponenten verändert werden.

Bekannt sind ferner auch elektronisch arbeitende Geräte, so zum Beispiel aus der US 4,989,222 und der US 4,697,278.

Der Erfindung liegt die Aufgabe zugrunde, eine einfach und preisgünstig herstellbare Abdeckkappe für Radnaben mit integriertem Kilometerzähler zu schaffen, bei der die Einstellung auf den maßgeblichen Radumfang auf einfache Weise vorgenommen werden kann.

Zur Lösung dieser Aufgabe ist eine Abdeckkappe für die Radnabe einer Fahrzeugachse mit den eingangs genannten Merkmalen gekennzeichnet durch
- elektrische, magnetische oder optische Mittel zur Erfassung der Nabenumdrehungen, bestehend aus einem Geber, welcher an dem Sicherungselement befestigt ist, und einem Nehmer, welcher in der Abdeckkappe angeordnet und mit dieser umlaufend ist,
- eine elektronische Recheneinheit zur Übertragung der mit den Erfassungsmitteln erfassten Nabenumdrehungen in einen Anzeigewert,
- eine in der Abdeckkappe angeordnete Spannungsversorgung für die Recheneinheit und die Anzeige,
- ein außen an der Abdeckkappe angeordnetes Schaltelement zum vorübergehenden Einschalten der Anzeige und
- eine Zeitschaltung, welche die eingeschaltete Anzeige nach einem vorgegebenen Zeitintervall abschaltet.

Die elektrische oder elektronisch arbeitende Anzeige ist daher nicht dauernd in Betrieb, was mit entsprechendem Stromverbrauch verbunden wäre, sondern sie wird durch Betätigung des Schaltelements nur vorübergehend aktiviert. Die Begrenzung der Aktivierungszeit der Anzeige erfolgt über eine entsprechende Zeitschaltung. Ferner kann, ebenfalls über eine entsprechende Schaltung, einem Mißbrauch vorgebeugt werden. Der Geber ist an einem Sicherungselement befestigt, welches eine zentrale Achsmutter der Fahrzeugachse gegen Losdrehen sichert.

Vorzugsweise wird das Schaltelement durch zwei elektrisch getrennte, jedoch räumlich nahe beieinander liegende Kontaktelemente an der Außenseite der Abdeckkappe gebildet, die gemeinsam eine Kontaktbrücke bilden. Zum Abrufen der Anzeige der Kilometerleistung wird zwischen den nahe beieinander liegenden Kontaktelementen eine elektrische Verbindung hergestellt, was durch jede beliebige elektrisch leitende Metallbrücke erfolgen kann, zum Beispiel durch ein Werkzeug, durch einen metallischen Kugelschreiber, etc..

Die starr und daher frei von irgendwelchen beweglichen Bauteilen gestalteten Kontaktelemente lassen sich einfach und wirkungsvoll gegen ein Eindringen von Schmutz, Feuchtigkeit, Salz und anderen schädigenden Einflüssen abdichten. Dies ist bei einer Fahrzeugachse, welche tagtäglich allen denkbaren Witterungsbedingungen ausgesetzt ist, von großem Vorteil. Sofern die Kontaktelemente zusätzlich etwas aus dem Gehäuse der Abdeckkappe vorspringen, vereinfacht dies die Kontaktierung z.B. mittels eines gebogenen Gegenstandes.

Vorzugsweise umfassen der Geber und der Nehmer induktiv arbeitende Elemente, da diese zum einen preiswert sind, zum anderen berührungsfrei arbeiten, wodurch die Erfassung der Nabenumdrehungen auf zuverlässige Art und Weise erfolgt. Anstelle dieser induktiv arbeitenden Elemente sind natürlich auch kapazitiv arbeitende Elemente oder optische Elemente (z.B. unter Verwendung von Photodioden) denkbar.

Des weiteren wird mit einer Ausgestaltung vorgeschlagen, dass die elektronische Recheneinheit an der Innenseite der Abdeckkappe angeordnet, und in eine Vergussmasse eingebettet ist. Die Vergussmasse verhindert das Eindringen von Feuchtigkeit in die elektronischen Elemente, des weiteren werden Manipulationen an der elektronischen Recheneinheit erschwert.

Von Vorteil ist es, auch die Spannungsversorgung sowie auch den Nehmer zumindest teilweise in die Vergussmasse einzubetten und auf diese Weise sicher gegenüber Erschütterungen und Fliehkräften unterzubringen.

Um die Anzahl der gefahrenen Kilometer auch bei Dunkelheit sicher identifizieren zu können, ist die Anzeige vorzugsweise eine selbstleuchtende LED-Anzeige.

Ein Ausführungsbeispiel der Erfindung ist in der nachfolgenden Beschreibung erläutert, wobei auf die Zeichnungen Bezug genommen wird. Darin zeigen:
- Figur 1: einen Schnitt durch das Ende eines Achsschenkels mit einem Radlager einer Nutzfahrzeug-Achse einschließlich der erfindungsgemäßen Abdeckkappe;
- Figur 2: eine stirnseitige Draufsicht auf die Abdeckkappe;
- Figur 3: ein vergrößerter Teilschnitt durch die Stirnwand der Abdeckkappe in der Ebene von Kontaktelementen;
- Figur 4: einen Schnitt analog der Fig. 1 bei einer zweiten Ausführungsform der Erfindung.

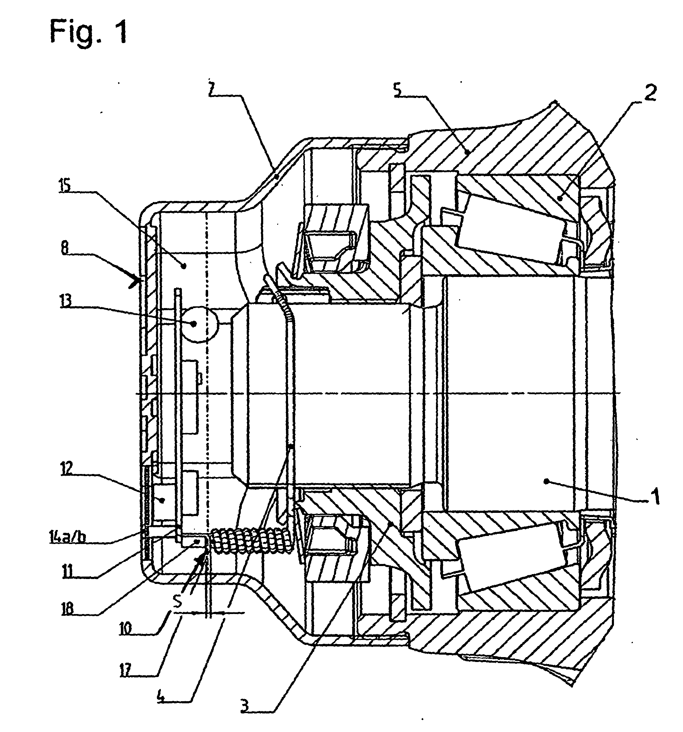

Zur Veranschaulichung eines ersten Ausführungsbeispiels zeigt Figur 1 das lagerseitige Ende einer Nutzfahrzeug-Achse und insbesondere der Achse eines gezogenen Fahrzeuganhängers. Dargestellt sind ein feststehender Achsschenkel 1 am Ende der Achse, mindestens ein Wälzlager 2, eine auf einem Endgewinde des Achsschenkels 1 festgeschraubte zentraler Achsmutter 3 mit ihrem Sicherungsbolzen 4, und schließlich die auf dem Wälzlager 2 drehbar gelagerte Achsnabe 5 der Achse. An ihrem äußeren, offenen Ende ist die Radnabe 5 mit einem umlaufenden Bund versehen, auf den mittels einer Schraub- oder Drehverriegelung eine Abdeckkappe 7 aufgesetzt ist. Die Abdeckkappe 7 kann auf ihrer Außenseite 8 mit einer Kennzeichnung zum Beispiel des Achsenherstellers versehen sein. Die Abdeckkappe 7 besteht vorzugsweise aus Kunststoff, zum Beispiel aus Polyamid.

Die primäre Aufgabe der Abdeckkappe 7 besteht darin, ein Eindringen von Schmutz und Feuchtigkeit in die Radnabe 5 und insbesondere in deren Wälzlagerung zu vermeiden. Im vorliegenden Fall dient die Abdeckkappe darüberhinaus der Aufnahme einer Einrichtung zur Erfassung der Nabenumdrehungen. Bei einem Nutzfahrzeug und insbesondere einem mehrachsigen Nutzfahrzeug-Anhänger reicht es aus, wenn eine der Abdeckkappen des Fahrzeuges mit einer solchen Einrichtung versehen ist, welche die bisher absolvierte Kilometerleistung des Fahrzeuges anzeigt.

Die Einrichtung setzt sich in erster Linie zusammen aus elektrisch, magnetisch oder optisch arbeitenden Erfassungsmitteln 10, einer Leiterplatte 11 welche eine elektronische Steuereinheit mit Mikroprozessor aufnimmt, einer von außen sichtbaren Anzeige 12, einer Batterie 13 zur Spannungsversorgung sowie zwei Kontaktelementen 14a, 14b. Die meisten dieser Bauteile sind an der Innenseite der Abdeckkappe 7 angeordnet, und dort in einer Vergussmasse 15, zum Beispiel aus Kunstharz, dauerhaft eingebettet. Die Vergussmasse 15 verhindert ein Eindringen von Feuchtigkeit in die empfindlichen elektronischen Bauteile, insbesondere in den Mikroprozessor auf der Leiterplatte 11 sowie ferner in die ebenfalls in die Vergussmasse eingebettete Batterie 13. Außerdem verhindert die Einbettung der Bauteile in die Vergussmasse, dass die beim Fahren wirksamen Fliehkräfte und Erschütterungen die Bauteile schwächen.

Die Erfassungsmittel 10 bestehen beim Ausführungsbeispiel aus einem mit der Achse 1 feststehenden, induktiv arbeitenden Geber 17 sowie einem in der Abdeckkappe befestigten und daher mit dieser umlaufenden, induktiven Nehmer 18. Der über eine Signalleitung mit der Leiterplatte 11 verbundene Induktionsnehmer 18 ist vorzugsweise ein sogenannter Reedkontakt. Er ist zu seiner Fixierung ebenfalls größtenteils in die Vergussmasse 15 eingebettet, und zwar möglichst nahe der Mantelfläche der Abdeckkappe 7, um dort gegenüber Fliehkräften abgestützt zu werden.

Der Induktionsgeber 17 ist in einfacher und preisgünstiger Weise an dem Befestigungsdraht jenes Sicherungsbolzens 4 befestigt, welcher die zentrale Achsmutter 3 gegen Losdrehen sichert. Der Befestigungsdraht kann mit einer Aufweitsperre versehen sein. Der Induktionsgeber 17 benötigt keine eigene Spannungsversorgung, es eignet sich zum Beispiel ein Permanentmagnet. Diesem liegt bei jeder Umdrehung mit einem geringen Spalt F der Induktionsnehmer 18 gegenüber, so dass bei jeder Umdrehung eine Signalabgabe an den Induktionsnehmer 18 erfolgt. Die Verarbeitung dieses elektrischen Signals erfolgt durch die elektronische Recheneinheit 11 der Leiterplatte. In dem Datenspeicher der elektronischen Recheneinheit 11 ist zu diesem Zweck der Reifenumfang des jeweiligen Fahrzeugrades abgespeichert. Aus der Zahl der von dem Induktionsnehmer 18 erfassten Impulse sowie dem im Datenspeicher abgelegten Reifenumfang ermittelt der Mikroprozessor der elektronischen Recheneinheit die Summe der gefahrenen Kilometer. Diese werden digital auf der in einer Öffnung der Abdeckkappe 7 angeordneten LED-Anzeige 12 angezeigt.

Zur Aktivierung der LED-Anzeige 12 sowie verschiedener weiterer Funktionen dienen die beiden außenliegenden, gemeinsam eine Brücke bildenden Kontaktelemente 14a, 14b. Werden diese mittels eines metallischen Gegenstandes überbrückt, führt dies zu einem Aktivierungssignal, welches die LED-Anzeige 12 für eine Anzeigedauer von z. B. zehn Sekunden einschaltet. Implementiert in der Steuereinheit ist eine Zeitschaltung, welche zunächst zu Kontrollzwecken kurz den fest eingestellten Reifen-Abrollumfang anzeigt, und erst anschließend für ein längeres Zeitintervall die Laufleistung in Kilometern.

Die Kontaktelemente 14a, 14b lassen sich im Vergleich z.B. zu einer Drucktaste sehr einfach und wirkungsvoll gegenüber der Abdeckkappe 7 abdichten. Außerdem stellt die Aktivierung der Anzeige über die Kontaktelemente 14a, 14b den besten Kompromiss aus Alltagstauglichkeit und Vermeidung von Missbrauch dar. Denn die Abfrage der Kilometerleistung ist häufig bei Wartungsarbeiten an der Fahrzeugachse erforderlich. Dann ist jedoch regelmäßig ein metallisches Werkzeug griffbereit, mit dem sich die aus den elektrischen Kontaktelementen 14a, 14b gebildete Kontaktbrücke schließen lässt.

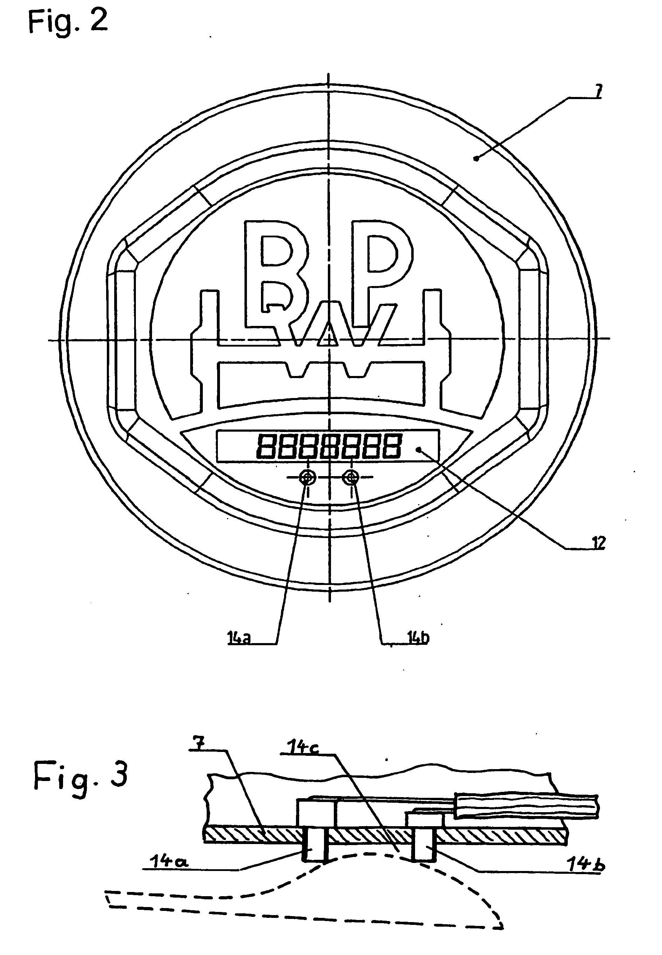

Gemäß Fig. 3 springen die Kontaktelemente 14a,14b etwas aus der Stirnwand der Abdeckkappe 7 vor, so dass sich zwischen ihnen ein Freiraum 14c befindet. Auf diese Weise ist eine sichere Kontaktierung auch unter Verwendung eines gebogenen Gegenstandes möglich, hier eines Löffels. Eine Aktivierung durch Kontaktierung ist andererseits nicht so einfach, dass jedermann und zum Beispiel an dem Fahrzeug vorbeigehende Passanten versucht wären, die Anzeige einzuschalten. Hierzu trägt auch bei, dass die Bestimmung der beiden knopfförmigen Kontaktelemente 14a,14b für Nichtfachleute jedenfalls nicht offensichtlich ist. Außerdem ist softwareseitig im Mikroprozessor implementiert, dass die Anzeige 12 bei mehrmaliger und vorzugsweise zehnmaliger Betätigung dieser Kontaktbrücke, ohne dass zwischenzeitlich der Nehmer 18 einen Impuls abgibt, abschaltet. Sie läßt sich dann erst wieder Aktivieren, nachdem der Nehmer 18 zumindest einen Drehimpuls erfasst hat, d.h. das Fahrzeug bewegt wurde.

Ebenfalls implementiert ist eine Schaltung für den Fall, dass es im Winterfahrbetrieb durch Salzwasser bzw. Salzsprühnebel zu einer ungewollten Dauerüberbrückung der Kontakte 14a,14b kommt. Denn stellt die Steuereinheit dort über einen sehr kurzen Zeitraum eine Vielzahl von Kontaktüberbrückungen fest, und liefert der Reedkontakt 18 in diesem Zeitraum regelmäßige Signale, so schaltet die Steuereinheit die Anzeige 12 ab. Sie wird erst wieder in den Normalmodus zurückgestellt, wenn das Fahrzeug steht. Dies wird systemintern dann angenommen, wenn der Reedkontakt 18 z.B. dreißig Sekunden lang keinen Impuls erfährt.

In dem Datenspeicher implementiert oder auch zusätzlich ist ein Sicherungsspeicher vorgesehen. Dieser sichert in vorgegebenen Laufleistungsabschnitten, z.B. nach jeweils zehn Kilometern, alle relevanten Daten.

In besonders einfacher Weise ist es möglich, das Gerät auf den Abrollumfang des verwendeten Reifens einzustellen. Die hierbei verwendeten Einstellelemente sind der innen in der Abdeckkappe angeordnete Reedkontakt 18 sowie die aus den Kontaktelementen 14a, 14b gebildete Kontaktbrücke. Zur Programmierung des Abrollumfangs wird zum Beispiel wie folgt vorgegangen:

Herstellerseitig vorgesehen ist eine Grundprogrammierung, welche dem in der Praxis am meisten verbreiteten Abrollumfang von Nutzfahrzeugreifen entspricht. Denn ca. 80 % der über die Straßen der Bundesrepublik Deutschland fahrenden LKW-Schwerlastanhänger weisen Reifen mit demselben Abrollumfang auf. Dieser Abrollumfang ist daher herstellerseitig vorprogrammiert. Zur Programmierung auf einen anderen Abrollumfang wird bei abgenommener Abdeckkappe 7 zunächst der Reedkontakt 18 aktiviert. Sodann wird durch entsprechendes mehrfaches Schließen der vorderseitigen Kontaktbrücke der auf der Anzeige 12 angezeigte Wert Ziffer für Ziffer solange geändert, bis dort der richtige Abrollumfang erscheint. Jede einzelne und die abschließende Bestätigung erfolgt wiederum durch Aktivierung des Reedkontaktes 18. Um hierbei Irrtümer auszuschließen, muss zum Beispiel eine mehrfache hintereinander folgende Betätigung des Reedkontaktes 18 vorgenommen werden, erst dann akzeptiert das System den zuletzt eingestellten Gesamtwert, der dann auch endgültig ist und nicht mehr verändert werden kann.

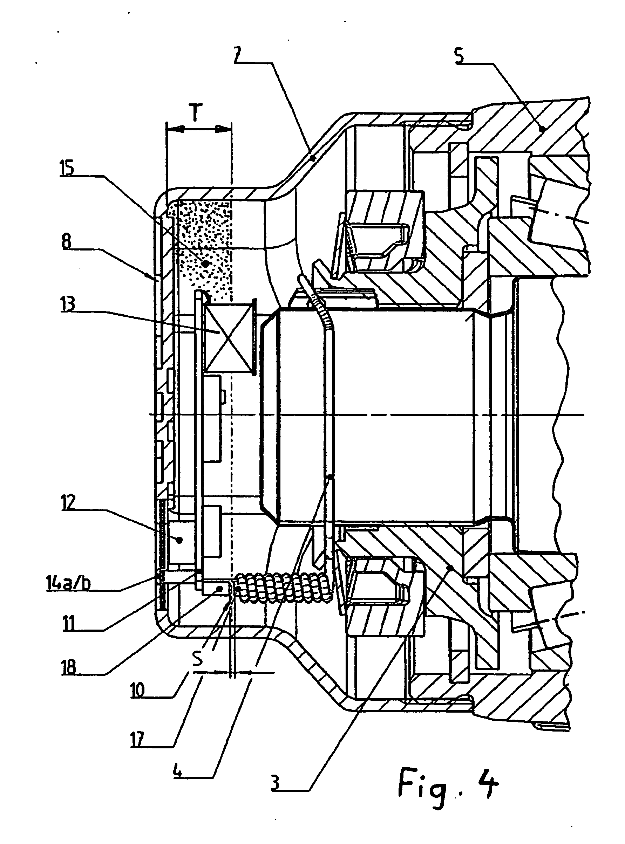

Die Figur 4 zeigt ein zweites Ausführungsbeispiel. Die der Spannungsversorgung dienende Batterie 13 befindet sich hierbei in einem von innen her zugänglichen Batteriefach. Das Batteriefach ist zu einem großen Teil in die Vergussmasse 15 der Tiefe T eingebettet, nur der Deckel des Batteriefachs liegt frei und ist auf diese Weise zum Batterieaustausch zu öffnen.

Bei allen gezeigten Ausführungsformen beträgt die Batteriespannung vorzugsweise 3 Volt. Fällt durch Teilentladung die Spannung unter einen Grenzwert von z.B. 1,9 Volt, was mittels einer implementierten Spannungserfassungs-Einheit festgestellt wird, so schaltet die Steuereinheit die Anzeige 12 auf Dauerbetrieb oder auf einen Blinkmodus. Um Strom zu sparen, erfolgt vorzugsweise nur eine kleine Anzeige, z.B. durch einen kleinen LED-Punkt.

### Bezugszeichenliste

- 1: Achsschenkel
- 2: Wälzlager
- 3: Achsmutter
- 4: Sicherungsbolzen
- 5: Radnabe
- 7: Abdeckkappe
- 8: Außenseite
- 10: Erfassungsmittel
- 11: elektronische Recheneinheit, Leiterplatte
- 12: Anzeige
- 13: Spannungsversorgung, Batterie
- 13a: Spannungsversorgung, Batterie
- 14a: Kontaktelement
- 14b: Kontaktelement
- 14c: Freiraum
- 15: Vergussmasse
- 17: Geber
- 18: Nehmer, Reedkontakt

- S: Spalt
- T: Tiefe der Vergussmasse

## Patentansprüche

1. Abdeckkappe für die Radnabe einer Fahrzeugachse, deren zentrale Achsmutter (3) durch ein Sicherungselement (4) gegen Losdrehen gesichert ist, mit einer Einrichtung zur Erfassung der Nabenumdrehungen sowie Mitteln zur Umwandlung der erfassten Nabenumdrehungen in einen Wert, der auf einer außen an der Abdeckkappe sichtbaren Anzeige (12) darstellbar ist,
**gekennzeichnet durch**
- elektrische, magnetische oder optische Mittel (10) zur Erfassung der Nabenumdrehungen, bestehend aus einem Geber (17), welcher an dem Sicherungselement (4) befestigt ist, und einem Nehmer (18), welcher in der Abdeckkappe angeordnet und mit dieser umlaufend ist,
- eine elektronische Recheneinheit (11) zur Übertragung der mit den Erfassungsmitteln (10) erfassten Nabenumdrehungen in einen Anzeigewert,
- eine in der Abdeckkappe angeordnete Spannungsversorgung (13) für die Recheneinheit (11) und die Anzeige (12),
- ein außen an der Abdeckkappe angeordnetes Schaltelement zum vorübergehenden Einschalten der Anzeige (12) und
- eine Zeitschaltung, welche die eingeschaltete Anzeige (12) nach einem vorgegebenen Zeitintervall abschaltet.

2. Abdeckkappe nach Anspruch 1, **dadurch gekennzeichnet, dass** das Schaltelement durch zwei elektrisch getrennte, jedoch räumlich nahe beieinander liegende Kontaktelemente (14a, 14b) an der Außenseite der Abdeckkappe gebildet wird, die gemeinsam eine Kontaktbrücke bilden.

3. Abdeckkappe nach Anspruch 2, **dadurch gekennzeichnet, dass** die beiden Kontaktelemente (14a,14b) als Vorsprünge gestaltet sind, zwischen denen sich ein Freiraum (14c) befindet.

4. Abdeckkappe nach Anspruch 1, **gekennzeichnet durch** eine Schaltung welche die Anzeige (12) abschaltet, sobald die Kontaktierungen des Schaltelements eine intern vorgegebene Maximalzahl erreichen, ohne dass die Erfassungsmittel (10) eine Nabendrehung erfassen.

5. Abdeckkappe nach einem der Ansprüche 2 bis 4, **gekennzeichnet durch** Eingabemittel für den maßgeblichen Reifen-Abrollumfang, wobei die Eingabemittel der Nehmer (18) und die Kontaktelemente (14a,14b) sind.

6. Abdeckkappe nach einem der vorhergehenden Ansprüche, **dadurch gekennzeichnet, dass** der Geber (17) und der Nehmer (18) induktiv arbeitende Elemente umfassen.

7. Abdeckkappe nach einem der vorangehenden Ansprüche, **dadurch gekennzeichnet, dass** die elektronische Recheneinheit (11) an der Innenseite der Abdeckkappe angeordnet, und in eine Vergussmasse (15) eingebettet ist.

8. Abdeckkappe nach Anspruch 7, **dadurch gekennzeichnet, dass** auch die Spannungsversorgung (13) in die Vergussmasse (15) eingebettet ist.

9. Abdeckkappe nach Anspruch 7, **dadurch gekennzeichnet, dass** ein durch einen Deckel verschließbares Batteriefach derart in die Vergussmasse (15) eingebettet ist, dass sich der Deckel im Inneren der Abdeckkappe aber außerhalb der Vergussmasse (15) befindet.

10. Abdeckkappe nach einem der Ansprüche 7 bis 9, **dadurch gekennzeichnet, dass** auch der Nehmer (18) zumindest teilweise in die Vergussmasse (15) eingebettet ist.

11. Abdeckkappe nach einem der vorangehenden Ansprüche, **dadurch gekennzeichnet, dass** die Anzeige (12) eine selbstleuchtende LED-Anzeige ist.

## Claims

1. Covering cap for the wheel hub of a vehicle axle, the central axle nut (3) of the said vehicle axle being secured against coming loose by a securing element (4), having a device for detecting the revolutions of the hub and also means for converting the detected revolutions of the hub into a value which can be displayed on a display (12) which is visible on the outside of the covering cap,
**characterized by**
- electrical, magnetic or optical means (10) for detecting the revolutions of the hub, comprising an encoder (17) which is attached to the securing element (4), and a decoder (18) which is arranged in the covering cap and rotates together with the said covering cap,
- an electronic computer unit (11) for transmitting the revolutions of the hub which are detected by the detection means (10) into a display value,
- a power supply means (13), which is arranged in the covering cap, for the computer unit (11) and the display (12),
- a switching element, which is arranged on the outside of the covering cap, for temporarily switching on the display (12), and
- a timing circuit which switches off the switched-on display (12) after a predefined time interval.

2. Covering cap according to Claim 1, **characterized in that** the switching element is formed by two contact elements (14a, 14b), which are electrically separate but physically close to one another, on the outer face of the covering cap, said contact elements together forming a contact bridge.

3. Covering cap according to Claim 2, **characterized in that** the two contact elements (14a, 14b) are in the form of projections, with a free space (14c) being located between the said projections.

4. Covering cap according to Claim 1, **characterized by** a circuit which switches off the display (12) as soon as the contact-making means of the switching element reach an internally predefined maximum number, without the detection means (10) detecting a revolution of the hub.

5. Covering cap according to one of Claims 2 to 4, **characterized by** input means for the critical tyre rolling circumference, with the input means being the decoder (18) and the contact elements (14a, 14b).

6. Covering cap according to one of the preceding claims, **characterized in that** the encoder (17) and the decoder (18) comprise inductively operating elements.

7. Covering cap according to one of the preceding claims, **characterized in that** the electronic computer unit (11) is arranged on the inner face of the covering cap and is embedded in an encapsulation compound (15).

8. Covering cap according to Claim 7, **characterized in that** the power supply means (13) is also embedded in the encapsulation compound (15).

9. Covering cap according to Claim 7, **characterized in that** a battery compartment, which can be closed by a cover, is embedded in the encapsulation compound (15) in such a way that the cover is located in the interior of the covering cap but outside the encapsulation compound (15).

10. Covering cap according to one of Claims 7 to 9, **characterized in that** the decoder (18) is also embedded at least partially in the encapsulation compound (15).

11. Covering cap according to one of the preceding claims, **characterized in that** the display (12) is a self-illuminating LED display.

## Revendications

1. Capot de recouvrement du moyeu de roue d'un essieu de véhicule dont l'écrou axial central (3) est empêché de se desserrer par un élément de protection (4) et présentant un dispositif de saisie des rotations du moyeu ainsi que des moyens de conversion des rotations du moyeu en une valeur qui peut être représentée sur un affichage (12) visible depuis l'extérieur du capot de recouvrement,
**caractérisé par**
- des moyens électriques, magnétiques ou optiques (10) de détection des rotations du moyeu, constitués d'un émetteur (17) fixé sur l'élément de protection (4) et d'un enregistreur (18) disposé dans le capot de recouvrement et tournant avec ce dernier,
- une unité électronique de calcul (11) qui convertit en une valeur d'affichage les rotations du moyeu saisies par les moyens de détection (10),
- une alimentation en tension (13), disposée dans le capot de recouvrement, pour l'unité de calcul (11) et l'affichage (12),
- un élément de commutation disposé à l'extérieur du capot de recouvrement et qui permet de brancher temporairement l'affichage (12) et
- une commutation temporisée qui débranche après un intervalle de temps prédéterminé l'affichage (12) qui a été branché.

2. Capot de recouvrement selon la revendication 1, **caractérisé en ce que** l'élément de commutation est formé par deux éléments de contact (14a, 14b) séparés électriquement mais situés spatialement à proximité l'un de l'autre sur le côté extérieur du capot de recouvrement, et qui forment ensemble un pont de contact.

3. Capot de recouvrement selon la revendication 2, **caractérisé en ce que** les deux éléments de contact (14a, 14b) sont configurés comme saillies entre lesquelles est prévu un espace libre (14c).

4. Capot de recouvrement selon la revendication 1, **caractérisé par** un circuit qui débranche l'affichage (12) dès que les contacts de l'élément de commutation atteignent un nombre maximal, prédéterminé en interne, pendant lequel les moyens de détection (10) n'ont pas détecté une rotation du moyeu.

5. Capot de recouvrement selon l'une des revendications 2 à 4, **caractérisé par** des moyens d'introduction du périmètre de roulement déterminant du bandage de roue, les moyens d'introduction étant l'enregistreur (18) et les éléments de contact (14a, 14b).

6. Capot de recouvrement selon l'une des revendications précédentes, **caractérisé en ce que** l'émetteur (17) et l'enregistreur (18) comprennent des éléments travaillant par induction.

7. Capot de recouvrement selon l'une des revendications précédentes, **caractérisé en ce que** l'unité électronique de calcul (11) est disposée sur le côté intérieur du capot de recouvrement et est incorporée dans une pâte de scellement (15).

8. Capot de recouvrement selon la revendication 7, **caractérisé en ce que** l'alimentation en tension (13) est également incorporée dans la pâte de scellement (15).

9. Capot de recouvrement selon la revendication 7, **caractérisé en ce qu'**un compartiment à batterie apte à être fermé par un couvercle est incorporé dans la pâte de scellement (15) de telle sorte que le couvercle soit situé à l'intérieur du capot de recouvrement mais à l'extérieur de la pâte de scellement (15).

10. Capot de recouvrement selon l'une des revendications 7 à 9, **caractérisé en ce que** l'enregistreur (18) est également incorporé au moins en partie dans la pâte de scellement (15).

11. Capot de recouvrement selon l'une des revendications précédentes, **caractérisé en ce que** l'affichage (12) est un affichage LED auto-éclairé.
